# EUROPÄISCHE PATENTSCHRIFT

(11) **EP 0 684 674 B1**
(45) Veröffentlichungstag und Bekanntmachung des Hinweises auf die Patenterteilung: **16.09.1998**
(21) Anmeldenummer: 95106048.2
(22) Anmeldetag: 22.04.1995
(51) Int. Cl.: H02G 3/18

(54) **Kabeldurchführung für Doppelbodenplatten**
Cable feedthrough for false floor panels
Traversée de câble pour plaques de faux plancher

(30) Priorität: 27.05.1994 CH 1654/94
(43) Veröffentlichungstag der Anmeldung: 29.11.1995
(73) Patentinhaber: LANZ OENSINGEN AG, 4702 Oensingen (CH)
(72) Erfinder: Mühlethaler, Erhard, CH-3314 Schalunen (CH)
(74) Vertreter: OK pat AG

(56) Entgegenhaltungen:
- EP-A- 0 402 025
- DE-U- 7 726 276
- US-A- 4 551 577

## Beschreibung

Die Erfindung betrifft eine Kabeldurchführung für Doppelbodenplatten, mit einem zum Einsetzen in einen Ausschnitt der Doppelbodenplatte bestimmten Halter und einer vom Halter getragenen Kabelführung, die Öffnungen für durchzuführende Kabel aufweist.

Bei Doppelböden, die vorwiegend in Büro-, Verwaltungs-, Industrie- und Gewerbebauten eingebaut werden, sind im Hohlraum unter den den begehbaren Fussboden bildenden Doppelbodenplatten Leitungen verschiedenster Art, wie beispielsweise für die Stromversorgung, Telefon, Steuer- und Datenverbindungen für EDV usw. verlegt. Die Leitungen sind vielerorts mit im Hohlraum montierten Anschluss- bzw. Verteilkästen verbunden, bei denen über Steckdosen Kabel von Geräten oder sonstigen Einrichtungen angeschlossen werden können, die im Raum über dem Doppelboden stationiert sind. Diese Kabel laufen dabei durch Kabeldurchführungen, die nach Bedarf in einzelnen Doppelbodenplatten eingebaut sind. Solche Durchführungen sind oft nicht oder nicht voll mit Kabeln belegt, sondern auf Reserve für spätere Erweiterungen eingebaut. Sie müssen derart dimensioniert sein, dass ein bequemes Auswechseln und Durchziehen der Kabel mit montierten Steckern möglich ist.

Eine bekannte Kabeldurchführung der genannten Art besteht aus einem Aussenring und einem darin gehaltenen scheibenförmigen Einlegeteil aus Kunststoff. Das Einlegeteil besteht aus zwei Hälften, die seitlich scharnierartig miteinander verbunden sind. Zur Durchführung der Kabel sind senkrechte Bohrungen vorgesehen, die je zur Hälfte in der einen und in der anderen der einander berührenden Seitenflächen der Einlegeteil-Hälften liegen. Wenn ein Kabel durchzuziehen ist, wird das Einlegeteil aus dem Aussenring herausgenommen und aufgeklappt, und nach Einlegen des Kabels wieder geschlossen sowie in den Aussenring eingesetzt.

Diese Handhabung ist umständlich, besonders wenn mehrere Kabel gleichzeitig in die Halbbohrungen einzulegen sind. Beim Austritt aus den senkrechten Bohrungen besteht die Gefahr, dass die Kabel scharf abgeknickt und beschädigt werden. Bei nicht benutzten oder nicht voll belegten Kabeldurchführungen sind deren Bohrungen offen zugänglich, was unansehnlich wirkt und den Durchtritt von Staub und Schmutz begünstigt.

Ein weiterer Nachteil ist darin zu sehen, dass der Aussenring (Halter) der Kabeldurchführung normalerweise im Durchmesser gestuft ist, was eine entsprechende, mit Spezialbohrern auszuführende Stufenbohrung in der Doppelbodenplatte erfordert. Diese Arbeit kann nicht auf der Baustelle durchgeführt, sondern muss in einer Werkstatt gemacht werden.

Da bekannte Durchführungen dieser Art immer lochförmig, d.h. innerhalb der Fläche der Doppelbodenplatte angebracht sind, können die betreffenden Platten nicht entfernt werden, ohne dass gleichzeitig die durchgeführten Kabel entfernt bzw. deren Stecker aus der Bodendose ausgezogen werden. Dadurch wird das Umplazieren von Platten und Bodendosen erheblich erschwert.

Aus EP-A-0 402 025 ist eine Kabeldurchführung mit den Merkmalen des Oberbegriffes des Anspruchs 1 bekannt. Zum Umplazieren von Platten muß die Kabeldurchführung aus der Platte demontiert werden.

Der Erfindung liegt die Aufgabe zugrunde, eine Kabeldurchführung der eingangs genannten Art vorzuschlagen, die vorstehend erwähnte Nachteile nicht aufweist.

Diese Aufgabe wird durch die im Patentanspruch 1 angegebene Erfindung gelöst. Hierbei weist die Kabeldurchführung eine rechteckige Form auf und ist in einen seitlich offenen Ausschnitt eingesetzt, der in einer Randzone der Doppelbodenplatte angeordnet ist. Für die durchzuführenden Kabel sind in einer Kabelführung Schlitze vorgesehen, die eine schiefwinklig zur Horizontalen verlaufende Kabelführungsbahn bilden. Die Schlitze verlaufen parallel zu den Schmalseiten der rechteckigen Kabelführung und sind an der mit dem Rand zusammenfallenden Längsseite der Kabelführung offen. Um die Verschmutzung bei nicht benutzten Schlitzen zu vermeiden ist eine sich über die Schlitze erstreckende Abdeckung, z.B. in Form einer Streifenbürste, vorgesehen.

Die mit der Erfindung erzielten Vorteile sind darin zu sehen, dass die Kabel wesentlich einfacher eingelegt werden können, wobei die Art und Grösse der verwendeten Stecker keine Rolle spielt. Der am Rand der Doppelbodenplatte angeordnete rechtekkige offene Ausschnitt kann einfach und ohne Spezialwerkzeug in der Werkstatt oder auf der Baustelle hergestellt werden. Zudem erlaubt der vorgeschlagene Ausschnitt, dass die Doppelbodenplatte und die Kabeldurchführung separat demontiert werden können. Durch die schiefwinklige Anordnung der Kabelführungsbahnen wird ein scharfes Abknicken der Kabel beim Austritt an der Oberseite der Bodenplatte vermieden. Der in den Ausschnitt eingesetzte Halter ist derart gestaltet, dass er unabhängig von der Dicke eines Bodenbelages praktisch nicht vorsteht und anderseits auch keine Vertiefung gebildet wird. Mit der vorgeschlagenen Abdeckung bleiben die nicht benutzten Schlitze gegen das Eindringen von Staub und Schmutz verschlossen, ohne dass das Hindurchführen von Kabeln durch andere Schlitze behindert wird.

Im folgenden wird die Erfindung anhand eines Ausführungsbeispieles in Verbindung mit der Zeichnung näher erläutert. Es zeigen:
- Fig.1: eine Draufsicht der erfindungsgemässen Kabeldurchführung,
- Fig.2: einen Schnitt entlang der Linie II-II in Fig.1, und
- Fig.3: eine Seitenansicht der Kabeldurchführung.

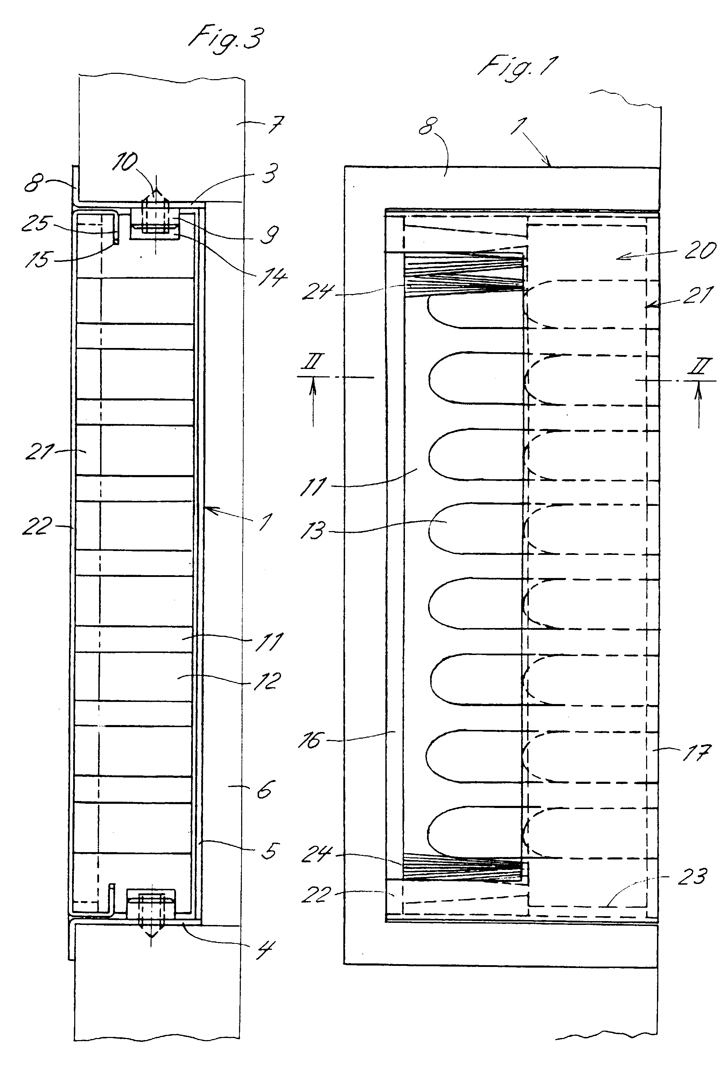

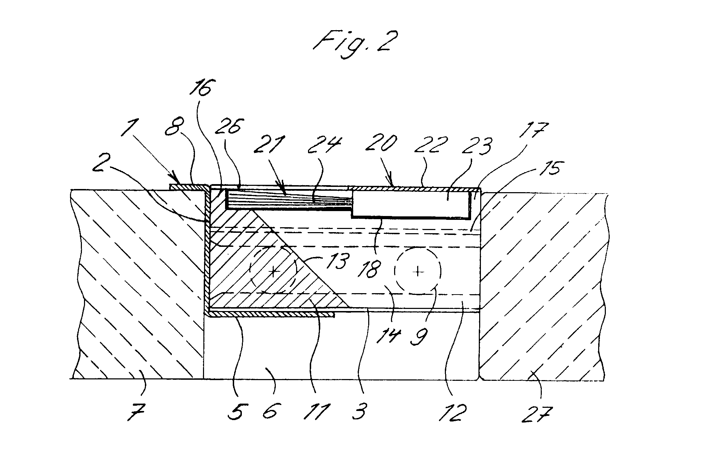

In den Fig.1 bis 3 ist mit 1 ein rechteckiger Halter in Form eines Einbaurahmens bezeichnet, der eine Längswand 2, zwei Querwände 3, 4 und einen Boden 5 aufweist. Der Halter 1 ist in einen rechteckigen, an einer Längsseite offenen Ausschnitt 6 eingesetzt, der an einem Rand einer Doppelbodenplatte 7, bzw. von einem solchen Rand ausgehend, angebracht ist. An den Oberkanten der Längswand 2 und der Querwände 3, 4 ist ein Flansch 8 angeordnet, der bei eingesetztem Halter 1 auf der Doppelbodenplatte 7 aufliegt und dabei die Ränder des Plattenausschnittes 6 überdeckt. An den Innenseiten der Querwände 3, 4 sind je zwei einspringende Nocken, vorzugsweise in Form von Anschweissmuttern 9 vorgesehen. In diese sind Gewindestiftschrauben 10 eingeschraubt, mittels welchen der Halter 1 im Ausschnitt 6 gesichert werden kann. Der Halter 1 kann beispielsweise als Blechbiegeteil hergestellt sein.

Im Halter 1 ist eine beispielsweise aus Kunststoff hergestellte, rechteckige Kabelführung 11 von der Seite her eingeschoben. In ihr sind Öffnungen in Form von Schlitzen 12 vorgesehen, die je eine schiefwinklig zur Horizontalen verlaufende Kabelführungsbahn 13 mit halbkreisförmigem Querschnitt bilden. Die Schlitze 12 verlaufen parallel zu den Schmalseiten 3, 4 der Kabelführung 11 und sind an der mit dem Rand der Doppelbodenplatte 7 zusammenfallenden Längsseite der Kabelführung 11 offen. An den Schmalseiten der Kabelführung 11 sind je eine erste und eine zweite Führungsnut 14 bzw. 15 vorgesehen. Bei eingeschobener Kabelführung 11 greifen die Anschweissmuttern 9 in die ersten Führungsnuten 14 ein, so dass die Kabelführung 11 vom Halter 1 getragen wird und in der Höhenlage bezüglich dem Halter fixiert ist. An der Oberseite der Kabelführung 11 sind zwei Rippen 16, 17 und eine dazwischenliegende Vertiefung 18 vorgesehen, die sich in Längsrichtung der Kabelführung 11 erstrecken (die Rippe 17 ist jedoch von den Schlitzen 12 unterbrochen).

Mit 20 ist eine Abdeckung bezeichnet, die sich aus einer Streifenbürste 21 und einem Schieber 22 zusammensetzt. Die Streifenbürste 21, die aus einem Borstenhalter 23 und an diesem befestigten Borsten 24 (in Fig.1 nur zum Teil dargestellt) besteht, wird zwischen den Rippen 16, 17 geführt, wobei der Borstenhalter 23 in der Vertiefung 18 liegt. Die Streifenbürste 21 wird hierbei vom Schieber 22 gehalten, der zu diesem Zweck an seinen Schmalseiten Führungsstege 25 aufweist, die in die zweiten Führungsnuten 15 der Kabelführung 11 eingreifen. Der Schieber 22 weist eine sich annähernd über die ganze Länge der Kabelführung 11 erstreckende rechteckige Aussparung 26 auf, so dass die Schlitze 12 im Bereich der Kabelführungsbahnen 13 lediglich von den flexiblen Borsten 24 bedeckt sind.

Nach der Befestigung des Halters 1 im Ausschnitt 6 der Doppelbodenplatte 7 und dem Einschieben der Kabelführung 11 können die Kabel (nicht dargestellt) problemlos von der Seite bzw. von der Plattenkante her in die offenen Schlitze 12 eingelegt werden, während die Platte 7 am Rand angehoben oder die benachbarte Platte 27 entfernt ist. Die Kabelführung 11 braucht hierzu nicht herausgenommen zu werden, und es müssen auch die montierten Stecker nicht durch einen Plattenausschnitt hindurchgeführt werden. Sodann wird die Streifenbürste 21 aufgelegt und durch den Schieber 22 gesichert, wobei die Borsten 24 von den Kabeln verdrängt werden, die nicht benutzten Schlitze 12 durch die Borsten 24 jedoch genügend überdeckt sind. Durch Anfügen der mit der Kabeldurchführung bestückten Doppelbodenplatte 7 an eine benachbarte Doppelbodenplatte 27 (Fig. 2) wird ein Verschieben der Kabelführung 11 und des Schiebers 22 verhindert. - Die beschriebene Kabeldurchführung sieht auch ansprechend aus, und vor allem können Bodenbeläge aller Art, mit denen die Platten belegt sind, sehr leicht und präzise entlang den geraden Kanten ausgeschnitten werden.

## Patentansprüche

1. Kabeldurchführung für Doppelbodenplatten, mit einem zum Einsetzen in einen Ausschnitt (6) einer Doppelbodenplatte (7) bestimmten Halter (1) und einer vom Halter (1) getragenen Kabelführung (11), die Öffnungen für durchzuführende Kabel aufweist,
wobei
- der Halter (1) und die Kabelführung (11) eine rechteckige Form aufweisen, wobei der Ausschnitt (6) an einer Seite offen und an einem Rand der Doppelbodenplatte (7) angeordnet ist,
- wobei die Öffnungen in der Kabelführung (11) Schlitze (12) sind,
- wobei die Schlitze (12) parallel zu den Schmalseiten der Kabelführung (11) verlaufen,
- und wobei eine Abdeckung (20) für die Schlitze (12) vorgesehen ist,
dadurch **gekennzeichnet,** daß die Schlitze (12) eine schiefwinklig zur Horizontalen verlaufende Kabelführungsbahn (13) bilden, und im eingebautem Zustand der Kabeldurchführung an der mit dem Plattenrand zusammenfallenden Längsseite der Kabelführung (11) offen sind.

2. Kabeldurchführung nach Anspruch 1, dadurch gekennzeichnet,
- dass der Halter (1) eine Längswand (2), zwei Querwände (3, 4) und einen Boden (5) aufweist,
- dass an den Oberkanten der Längswand (2) und der Querwände (3, 4) ein Flansch (8) angeordnet ist, der bei eingesetztem Halter (1) auf der Doppelbodenplatte (7) aufliegt,
- und dass an den Innenseiten der Querwände (3, 4) je zwei einspringende Nocken (9) auf gleicher Höhe vorgesehen sind.

3. Kabeldurchführung nach Anspruch 2, dadurch gekennzeichnet, dass die einspringenden Nocken (9) Anschweissmuttern sind, in die Gewindestiftschrauben (10) eingeschraubt sind, mittels welchen der Halter (1) nach dem Einsetzen in den Ausschnitt (6) der Doppelbodenplatte (7) gesichert werden kann.

4. Kabeldurchführung nach Anspruch 2, dadurch gekennzeichnet, dass die Kabelführung (11) an ihren Schmalseiten je eine erste (14) und eine zweite Führungsnut (15) aufweist, wobei die einspringenden Nocken (9) in die ersten Führungsnuten (14) eingreifen, und dass an der Oberseite der Kabelführung (11) zwei parallel zu den Längsseiten verlaufende Rippen (16, 17) vorgesehen sind, die eine Vertiefung (18) zur Aufnahme der Abdeckung (20) begrenzen.

5. Kabeldurchführung nach Anspruch 4, dadurch gekennzeichnet, dass die Abdeckung (20) eine Streifenbürste (21) ist und dass zu deren Sicherung an der Kabelführung (11) ein Schieber (22) mit seitlichen Führungsstegen (25) vorhanden ist, die je in die zweiten Führungsnuten (15) der Kabelführung (11) eingreifen.

## Claims

1. A cable lead-through for false floor panels, having a support (1) intended for insertion in an aperture (6) of a false floor panel (7) and having a cable conduit (11) which is borne by the support (1) and which has openings for cables to be passed through, wherein
- the support (1) and the cable conduit (11) are of rectangular shape, wherein the aperture (6) is open on one side and is disposed at an edge of the false floor panel (7),
- wherein the openings in the cable conduit (11) are slots (12),
- wherein the slots (12) run parallel to the narrow sides of the cable conduit (11),
- and wherein a covering (2) is provided for the slots (12),
characterised in that the slots (12) form a cable conduit path (13) which extends at an oblique angle to the horizontal and in the installed state of the cable lead-through are open on the longitudinal side of the cable conduit (11) which coincides with the panel edge.

2. A cable lead-through according to claim 1, characterised in that
- the support (1) has a longitudinal wall (2), two transverse walls (3, 4) and a base (5),
- that a flange (8) is disposed on the upper edges of the longitudinal wall (2) and of the transverse walls (3, 4) and rests on the false floor panel (7) when the support (1) is inserted.
- and that two re-entrant lugs (9) are provided at the same height on the inner faces of each of the transverse walls (3, 4).

3. A cable lead-through according to claim 2, characterised in that the re-entrant lugs (9) are welded-on nuts into which threaded studs (10) are screwed, by means of which the support (1) can be secured after its insertion in the aperture (6) of the false floor panel (7).

4. A cable lead-through according to claim 2, characterised in that the cable conduit (11) comprises a first (14) and a second guide channel (15) on each of its narrow sides, wherein the re-entrant lugs (9) fit into the first guide channels (14), and that two ribs (16, 17) which run parallel to the longitudinal sides are provided on the upper face of the cable conduit (11), which ribs delimit a recess (18) for receiving the covering (20).

5. A cable lead-through according to claim 4, characterised in that the covering (20) is a brush strip (21), and that a slide (22) comprising lateral guide ribs (25) is present for securing the brush strip on the cable conduit (11), which guide ribs each fit into the second guide channels (15) of the cable conduit (11).

## Revendications

1. Dispositif de traversée de câbles pour plaques de double paroi, comprenant un support (1) adapté pour être mis en place dans une découpe (6) d'une plaque de double paroi (7), et un guide-câbles (11) porté par le support (1) et comportant des ouvertures pour la traversée de câbles,
- le support (1) et le guide-câbles (11) présentant une forme rectangulaire, la découpe (6) étant ouverte sur un côté et étant située sur un bord de la plaque de double paroi (7),
- les ouvertures du guide-câbles (11) étant constituées par des fentes (12),
- les fentes (12) s'étendant parallèlement aux côtés étroits du guide-câbles,
- dispositif dans lequel est prévu un élément de recouvrement (10) pour les fentes (12),
caractérisé en ce que les fentes (12) forment une glissière (13) qui s'étend sur un angle important par rapport à l'horizontale et, à l'état monté du guide-câbles, sont ouvertes sur le côté longitudinal du guide-câbles qui coïncide avec le bord de la plaque.

2. Dispositif de traversée de câbles suivant la revendication 1, caractérisé en ce que
- le support (1) comporte une paroi longitudinale (2), deux parois transversales (3, 4) et un fond (5),
- il est prévu sur les bords supérieurs de la paroi longitudinale (2) et des parois transversales (3, 4) un rebord (8) qui s'applique sur la plaque de double paroi (7) lorsque le support (1) est mis en place,
- et les parois transversales (3, 4) comportent sur leurs côtés intérieurs deux saillies rentrantes respectives (9) de même hauteur.

3. Dispositif de traversée de câbles suivant la revendication 2, caractérisé en ce que les saillies rentrantes (9) sont des écrous soudés dans lesquels sont vissées des vis à tige filetée (le) au moyen desquelles le support (1) peut être fixé après sa mise en place dans la découpe (6) de la plaque de double paroi (7).

4. Dispositif de traversée de câbles suivant la revendication 2, caractérisé en ce que, sur chacun de ses côtés (3), le guide-câbles présente une première rainure de guidage (14) et une seconde rainure de guidage (15), les saillies rentrantes (9) pénétrant dans les premières rainures de guidage (14), et en ce que sur le côté supérieur du guide-câbles (11) sont prévues deux nervures (16, 17) parallèles aux côtés longitudinaux, qui délimitent un renfoncement (18) pour la réception de l'organe de recouvrement (20).

5. Dispositif de traversée de câbles suivant la revendication 4, caractérisé en ce que le dispositif de recouvrement (20) est constitué par une brosse en forme de bande (21), et en ce que, pour sa fixation sur le guide-câbles (11), il est prévu un coulisseau (22) qui comporte des barrettes de guidage latérales (25) pénétrant chacune dans l'une des secondes rainures de guidage (15) du guide-câbles (11).
